Europäisches Patentamt

European Patent Office

Office européen des brevets

(11) Veröffentlichungsnummer: **0 004 594**
**B1**

(12) **EUROPÄISCHE PATENTSCHRIFT**

(21) Anmeldenummer: **79100846.9**

(22) Anmeldetag: **21.03.79**

(51) Int. Cl.³: **B 62 D 33/04**

(54) Seitenwand für Kastenaufbauten von Lastkraftwagen.

(30) Priorität: **30.03.78 DE 2813593**

(43) Veröffentlichungstag der Anmeldung:
**17.10.79 Patentblatt 79/21**

(45) Bekanntmachung des Hinweises auf die Patenterteilung:
**11.02.81 Patentblatt 81/6**

(84) Benannte Vertragsstaaten:
**BE CH FR GB IT LU NL SE**

(56) Entgegenhaltungen:
**DE - A - 2 001 191**
**DE - A - 2 540 414**
**DE - B - 2 414 642**
**DE - C - 2 358 186**
**DE - U - 7 312 685**
**DE - U - 7 707 180**

(73) Patentinhaber: **Ewers, Franz**
**Jahnstrasse 21**
**D-5778 Meschede (DE)**

(72) Erfinder: **Ewers, Franz**
**Jahnstrasse 21**
**D-5778 Meschede (DE)**

(74) Vertreter: **Fritz, Herbert, Dipl.-Ing. et al,**
**Mühlenberg 74**
**D-5760 Arnsberg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Seitenwand für Kastenaufbauten von Lastkraftwagen

Die Erfindung bezieht sich auf eine Seitenwand für Kastenaufbauten von Lastkraftwagen, bestehend aus einer unteren Klappwand und einer damit gekoppelten Hubwand, die zwischen zwei in der Seitenwandebene liegende Pfosten gelagert ist. Dabei weisen die Pfosten jeweils Rechteckprofil auf und stehen weder innen noch außen gegenüber der Seitenwand vor.

Von der Klappwand zu dem Koppelungselement der Hubwand führt ein Seil, das in einem Kanal angeordnet ist, der an einem der Pfosten gegen die Seitenwand zu vorgesehen ist, der Pfostenbreite hat und in welchem auch die Seilrollen vorgesehen sind.

Bei einem Kastenaufbau der vorgenannten Art besteht die Möglichkeit des Beladens über eine Rückwand zwischen den beiden hinteren Pfosten der Seitenwände. Die lichte Innenbreite zwischen den beiden rückseitigen Pfosten kann bei einer Pfostenbreite von je 4 cm und bei der maximal möglichen Außenbreite des Kastenaufbaues so groß sein, daß für das Laden von zwei Paletten in Standard-Ausführung über die Rückseite genügend Platz zur Verfügung steht.

Bei einer bekannten Seitenwand für Kastenaufbauten von Lastkraftwagen der vorgenannten Art (DT—Gbm 77 07 180) ist jedem Pfosten ein Arm (Lenker) zugeordnet, der oben am Pfosten und unten seitlich in der Nähe des unteren Randes der Hubwand angelenkt ist. Unter dem Dach sind Schienen angebracht, in welche am oberen Rand der Hubwand befestigte Rollen geführt sind. Zur Koppelung der Klappwand mit der Hubwand sind für jeden Pfosten Seile vorgesehen, die in Dachnähe aus dem Pfosten austreten, bis zur Mitte des Kastenaufbaues geführt, dort umgelenkt und am oberen Rand der Hubwand befestigt sind. Im Bereich des Pfostens bleiben die Seile und die Seilführungselemente auch bei geöffneter Seitenwand nicht zugänglich, da sie in einem geschlossenen Rechteckprofil untergebracht sind.

Außerdem ist eine Seitenwand für Kastenaufbauten von Lastkraftwagen bekannt (DT—PS 23 58 186), bei der die pfostenseitigen Seile jeweils mit dem oberen Seilende an einem Drehsegment befestigt sind, welches etwa in der halben Höhe der Hubwand am Pfosten drehbar befestigt ist. Am Drehsegment ist ein Arm angebracht, dessen freies Ende im Bereich des unteren Randes der Hubwand angelenkt ist und der bei geschlossener Seitenwand lotrecht nach unten gerichtet ist. Dabei liegt das Seil etwa über einen Winkel von annähernd 180° auf dem Drehsegment auf. Die Möglichkeit einer Beladung des Kastenaufbaus von der Rückwand her ist dabei jedoch beschränkt, weil die Pfosten jeweils Teile aufweisen, die über die gesamte Höhe des Kastenaufbaus gegenüber der Seitenwand innenseitig vorstehen.

Die Erfindungsaufgabe ist darin zu sehen, eine Seitenwand für Kastenaufbauten von Lastkraftwagen der eingangs genannten Art so auszubilden, daß die von den Pfosten gebildeten Kanäle zwecks Wartung der Seile sowie der Kopplungs- und Verriegelungselemente zugänglich sind.

Diese Aufgabe wird durch die im Hauptanspruch genannten Merkmale gelöst.

Wenn eine solche Seitenwand geöffnet ist, dann liegen Seil sowie Befestigungs- und Umlenkelemente im Bereich der Klappwand und im Bereich der Hubwand frei zugänglich am rinnenförmigen Teil des Pfostens zbw. an der Leiste des Wandteiles. Dabei stehen vom Boden aus bis zumindest auf 3/4 der Aufbauhöhe keine Kupplungselemente an den Pfosten innenseitig vor. Zwischen den rückwärtigen Pfosten steht eine Beladungsfläche zur Verfügung, die sowohl der Breite als auch der Höhe nach für das Einladen von zwei Standardpaletten nebeneinander ausreichend ist.

Die Erfindung bezieht sich weiter im besonderen auf speziell geeignete Kupplungselemente.

Bei der Ausführung nach Anspruch 2 erstreckt sich die maximale Ladebreite zwischen den beiden hinteren Pfosten bis in Höhe der Drehsegmente, die zumindest in Höhe der halben Hubwand angeordnet sind, oder noch höher, wenn die Hubwand beim Öffnen über das Dach geführt wird.

Bei den weiteren Ausführungen (Anspruch 3 und 4) befinden sich die Drehsegmente sehr hoch im Scheitelbereich zwischen Dach und Hubwand. Weil man bei diesen Ausführungen für jede Seitenwand nur ein Drehsegment benötigt, besteht die Möglichkeit, dieses jeweils am vorderen Pfosten anzuordnen, so daß rückseitig zwischen den Pfosten die maximale Ladebreite über die ganze Höhe des Kastenaufbaus zur Verfügung steht. Das gleiche gild auch bei der Ausführungsform nach Anspruch 5, wo zur Koppelung und Führung der Seile lediglich Elemente benötigt werden, die im Kanal untergebracht sind und weder innen noch außen vorstehen.

Verriegelungselemente für die Wandteile, wie sie gemäß der weiteren Erfindung angeordnet sind, liegen weitgehend für die Wartung und Reparatur zugänglich und beeinträchtigen auch nicht die Ladebreite zwischen den Pfosten.

Im folgenden werden einige Ausführungsbeispiele der Erfindung beschrieben. Auf den beiliegenden Zeichnungen, auf welche Bezug genommen wird, zeigen:

Fig. 1 den Grundriß eines Kastenaufbaues eines Lastkraftwagens mit Seitenwänden nach der Erfindung.

Fig. 2 ist ein lotrechter Schnitt durch eine Seitenwand nach einer ersten Ausführungsform.

Fig. 3 und 4 zeigen in vergrößertem Maßstab die mit III bzw. IV gekennzeichneten Stellen von Fig. 2.

Fig. 5 und 6 sind Schnitte nach V von Fig. 4 bzw. VI von Fig. 3.

Fig. 7 bis 9 sind lotrechte Schnitte durch eine Seitenwand nach einer zweiten Ausführungsform der Erfindung in verschiedenen Stellungen.

Fig. 10 bis 12 sind lotrechte Schnitte durch eine Seitenwand nach einer dritten Ausführungsform der Erfindung in verschiedenen Stellungen.

Fig. 13 ist eine Draufsicht in Richtung XIII von Fig. 10.

Fig. 14 bis 16 zeigen lotrechte Schnitte durch eine Seitenwand nach einer vierten Ausführungsform der Erfindung in verschiedenen Stellungen.

Fig. 17 ist ein Schnitt C—C nach Fig. 21.

Fig. 18 zeigt in vergrößertem Maßstab die mit A näher gekennzeichnete Stelle von Fig. 15 bei geschlossener Seitenwand.

Fig. 19 und 20 entsprechen Fig. 18 bei teilweise geöffneter Seitenwand bzw. bei vollständig geöffneter Seitenwand.

Fig. 21 stellt eine Ansicht in Richtung B von Fig. 18 dar.

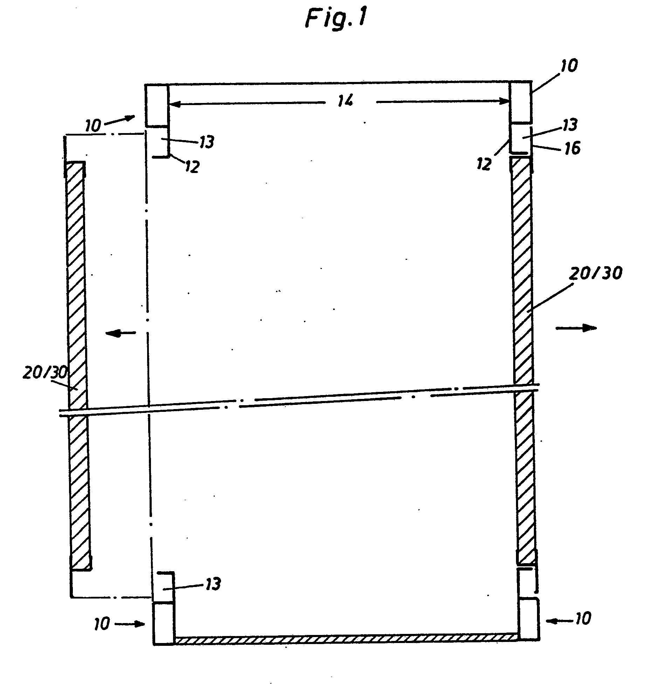

Der auf Fig. 1 im Grundriß dargestellte Kastenaufbau wird an jeder Längsseite durch eine Seitenwand 20/30 abgeschlossen, die geöffnet werden kann. An jeder Ecke des rechteckigen Grundrisses befindet sich ein Pfosten 10. Jede Seitenwand ist zwischen zwei Pfosten, einem vorderen Pfosten und einem hinteren Pfosten, angeordnet. Bei besonders langen Kastenaufbauten sind an jeder Längsseite ein vorderer Pfosten, ein hinterer Pfosten und ein Mittelpfosten vorgesehen und dazwischen zwei Seitenwände. Zwischen den beiden hinteren Pfosten ist eine nicht dargestellte Rückwand vorgesehen, die ebenfalls geöffnet werden kann. Dazwischen steht zum Laden von der Rückseite aus eine Nutzbreite 14 zur Verfügung. Die Nutzbreite 14 ist gleich groß wie die lichte Breite zwischen den geschlossenen Seitenwänden.

Jeder Pfosten 10 hat einen rechteckigen Querschnitt von der gleichen Breite wie die Seitenwand 20/30. Mit jedem Pfosten 10 steht ein rinnenförmiges Teil 12 in Verbindung, zur Seitenwand hin angeordnet und nach außen offen. Durch das rinnenförmige Teil ist ein Kanal 13 gebildet, der bei geöffneter Seitenwand von außen zugänglich und bei geschlossener Seitenwand durch eine Leiste 16 der Seitenwand abgedeckt ist.

Bei einer Pfostenbreite von etwa 4 cm, die auch der Wandbreite entspricht, ist die lichte Innenbreite des Kastenaufbaus zwischen den Seitenwänden und zwischen den Pfosten lediglich etwa 8 cm geringer als die vorgeschriebene maximale Außenbreite.

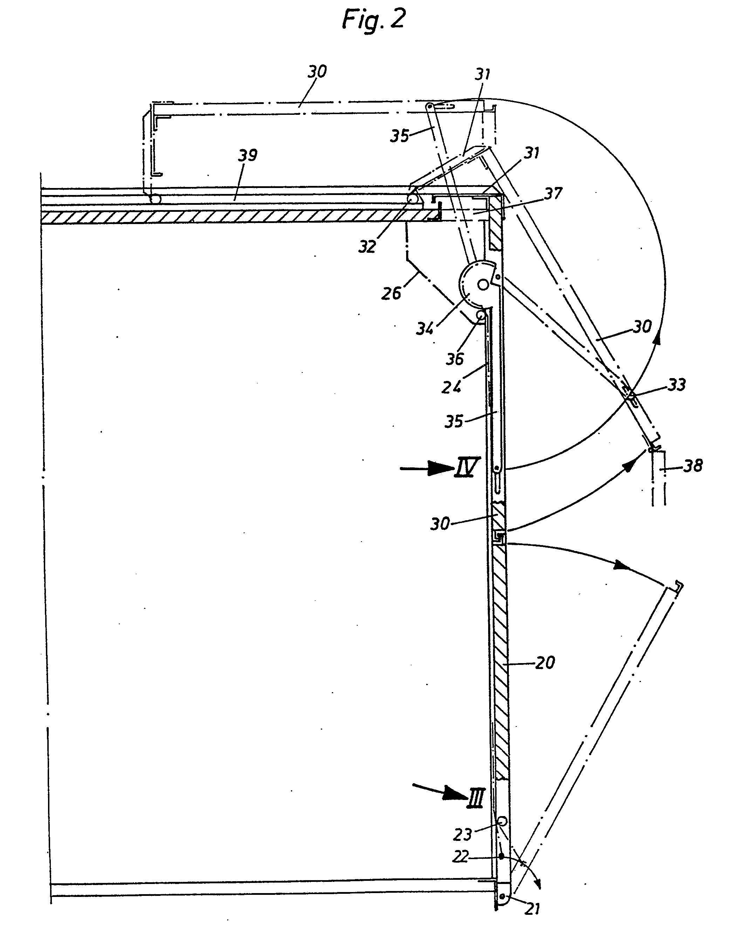

Die Seitenwand nach Fig. 2 besteht unten aus einer Klappwand 20 und oben aus einer Hubwand 30. Die Klappwand ist bodenseitig mit Gelenken 21 herunterklappbar befestigt. Zur Halterung und Führung der Hubwand 30 ist jeweils pfostenseitig ein Arm 35 vorgesehen, der bei geschlossener Hubwand (gestrichelte Ausführung) in einer lotrechten Stellung ist und vom Kanal 13 aufgenommen wird. Der Arm ist an einem ende in Gestalt eines Drehsegmentes 34 fortgesetzt. Das Drehsegment erstreckt sich über einen Winkel von etwas über 180° und ist jeweils pfostenseitig angelenkt. Am anderen Ende ist jeder Arm mittels eines Gelenkes 33 mit der Hubwand 30 im unteren Bereich derselben verbunden. Zur Koppelung der Klappwand mit der Hubwand ist ein Seil 24 vorgesehen. Dieses ist unten mit der Klappwand an einer Seilbefestigung 22 angebracht, die sich in der Nähe des Gelenkes 21 befindet. Nicht weit über dem Gelenk 21 ist das Seil an einer pfostenseitigen Rolle 23 in Richtung des Pfostens umgelenkt. Dabei wird das Seil vom Kanal 13 aufgenommen. Oben wird das Seil über eine pfostenseitige Rolle 36 auf das Drehsegment 34 umgelenkt, wo es befestigt ist. Drehsegmente sind im Bereich jedes Pfostens durch eine Verkleidung 26 abgedeckt.

Bei geschlossener Seitenwand sind die Arme 35 lotrecht nach unten gerichtet, wobei sie sich jeweils in den zugeordneten Kanälen 13 befinden, die durch die Leisten 16 der Klappwand bzw. der Hubwand abgedeckt sind. Das Seil liegt dabei über einen Winkel von über 180° auf dem jeweiligen Drehsegment. Eine dachseitige Öffnung 37 wird durch ein Dachanschlußteil 31 abgedeckt, das im rechten Winkel am oberen Rand der Hubwand 30 befestigt ist.

Beim Öffnen wird die Klappwand 20 heruntergeklappt. Dabei werden die beiden Seile nach unten gezogen, die Drehsegmente 34 gedreht, die Arme nach außen geschwenkt und die Hubwand 30 angehoben. Dabei werden am Dachanschluß 31 befestigte Rollen 32 in Schienen 39 geführt, die auf dem Dach angebracht sind. Wenn die Seitenwand vollständig geöffnet ist, dann hängt die Klappwand 20 lotrecht herunter, während die Hubwand sich über dem Dach in einer zum Dach parallelen Stellung befindet, wie strichpunktiert dargestellt ist. Im Grundriß steht dann die Hubwand seitlich nicht über dem Kastenaufbau vor. Bei geöffneter Seitenwand befinden sich die Arme 35 im bereich der Öffnung 37 und sind etwas zur Mitte des Aufbaus hin geneigt.

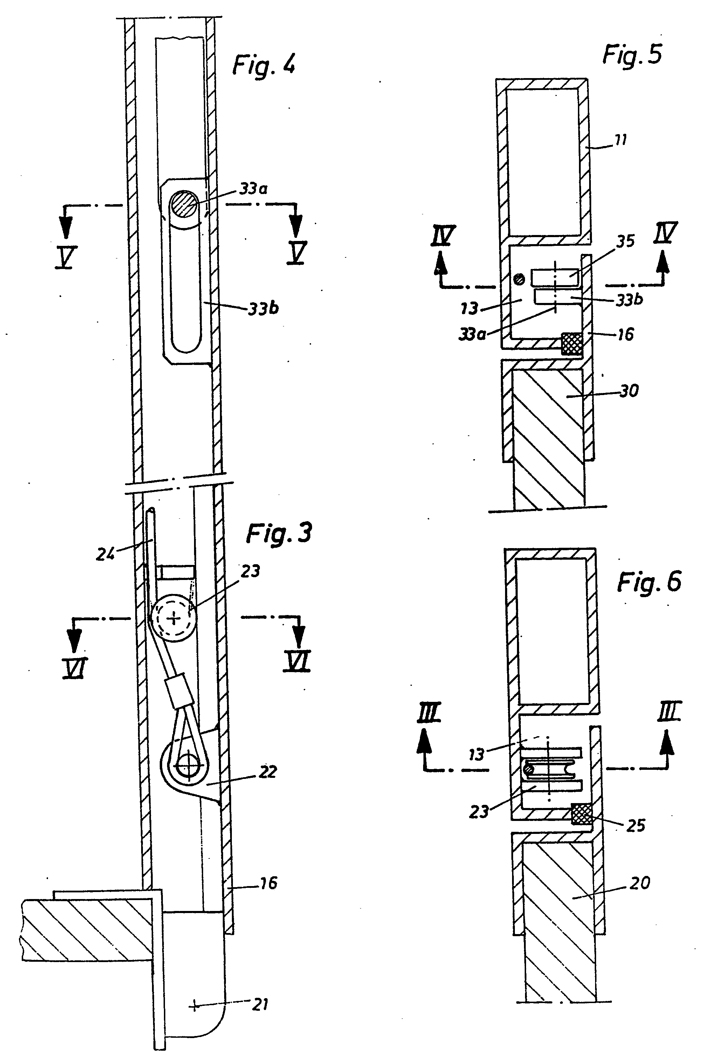

Die Seilbefestigung 22 im Bereich der Klappwand ist jeweils an der Leiste 16 derselben befestigt, wie man aus Fig. 3 erkennt. Die pfostenseitige Rolle 23 ist an einer Wand des rillenförmigen Teiles 12 des Pfostens befestigt (Fig. 6). Ein Schenkel dieses rinnenförmigen Teiles 12 liegt an einem Dichtungsstreifen 25, der an der Leiste 16 der Klappwand angebracht ist.

Wie das Gelenk 33 ausgebildet ist, durch welches der Arm 35 mit der Hubwand verbunden ist, geht aus Fig. 4 und 5 hervor. Am ende des Armes ist jeweils ein Gelenkbolzen 33a befestigt, der von einem Langloch einer Lasche 33b aufgenommen wird, die an der Leiste 16 der Hubwand befestigt ist.

Bei Kastenaufbauten, deren Höhe über das Standardmaß hinausgeht, kann am unteren Rand der Hubwand eine Zwischenwand 38 angelenkt sein. Die Wandteile sind bei geschlossener Seitenwand miteinander verriegelt. Die Verriegelungselemente können ebenfalls im Kanal 13 untergebracht sein.

Von der geschlossenen Stellung der Seitenwand bis zur Offenstellung führen die Arme eine Schwenkung von 190° bis 200° aus. Die Drehsegmente sind jeweils mit einer nicht dargestellten Feder verbunden. In der Offenstellung sind diese Federn gespannt. Wenn beim Schließen die Klappwand angehoben und dadurch die Seile gelockert werden, dann kommen die Federn zur Wirkung und leiten die Schließbewegung der Hubwand ein. Die Federkraft hält solange an, bis sich die Hubwand durch ihr Eigengewicht von selbst nach unten bewegt. Dabei wird die Klappwand angehoben.

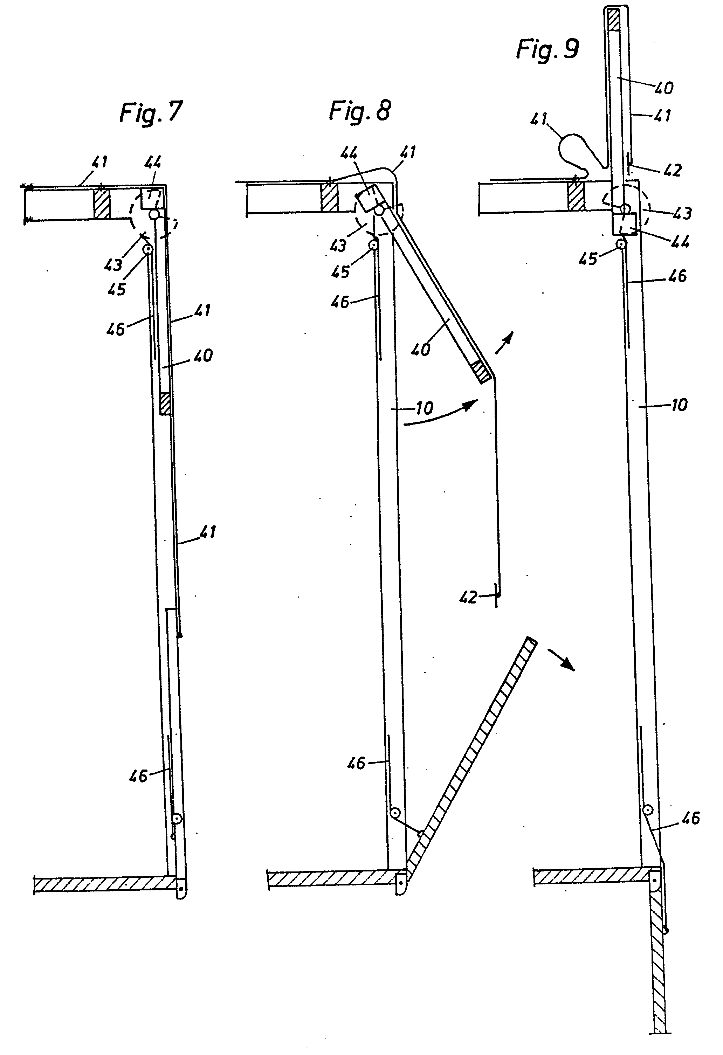

Bei der Seitenwand nach Fig. 7 bis 9 ist eine massive Klappwand vorgesehen, während die Hubwand 40 ebenso wie das Dach seblst als Rahmen ausgebildet und mit Bespannungsstoff 41 überzogen sind. Bei der geschlossenen Seitenwand (Fig. 7) bleibt zwischen der Hubwand und der Klappwand eine Öffnung, die mit dem Bespannungsstoff 41 geschlossen werden kann. Am unteren Rand derselben sind zu diesem Zweck Verschluß-elemente 42 vorgesehen.

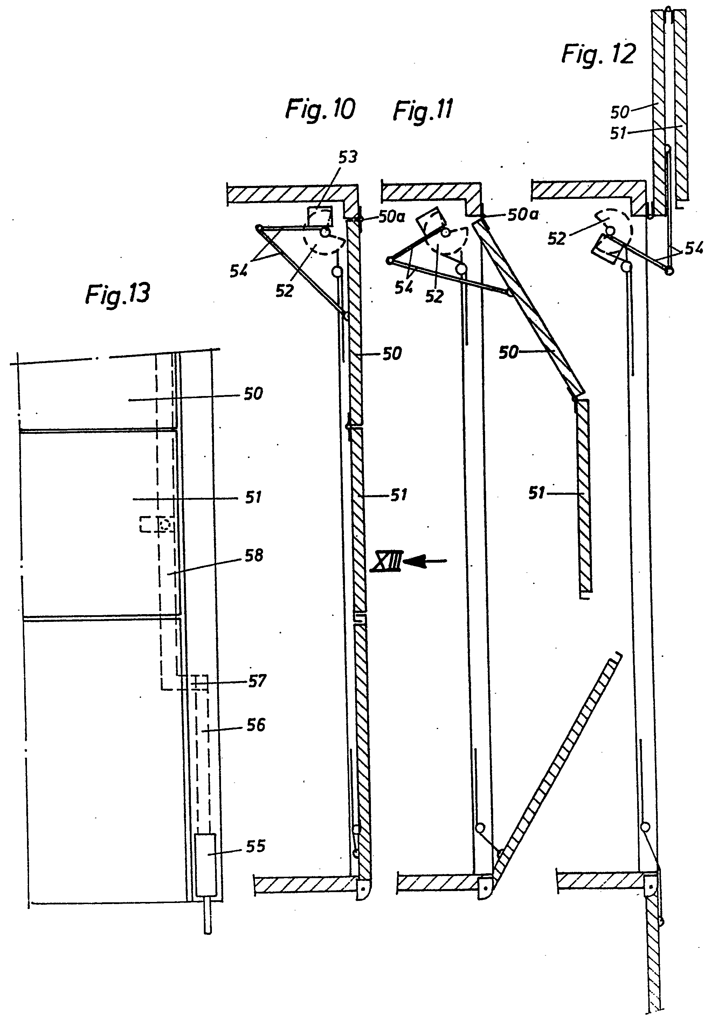

Die Hubwand 40 ist oben direkt mit eimem längsseitig durchgehenden torsionssteifen Rohr 44 verbunden, das an jedem Ende pfostenseitig drehbar gelagert ist. Zur Kuppelung der Klappwand mit der Hubwand ist bei dieser Seitenwand nur ein Seil 46 vorgesehen, das sich entweder im Bereich des vorderen oder des hinteren Pfostens befindet. Dieses Seil ist unten in den Kanal des Pfostens eingeführt und tritt oben über eine Rolle 45 aus dem Kanal heraus, wo es auf ein Drehsegment 43 aufgelegt ist, welches mit dem Rohr 44 fest verbunden ist. Die Drehachse des Drehsegmentes und des Rohres liegt etwa im winkelbereich Seitenwand-Dach. Beim Öffnen schwenkt die Hubwand 40 aus einer lotrecht nach unten gerichteten Stellung in eine lotrecht nach oben gerichteten Stellung wie auf Figur 9 dargestellt. Der Bespannungsstoff 41 zwischen Hubwand und Dach faltet sich dabei. Die Schließbewegung wird durch eine nicht gezeichnete mit dem Drehsegment verbundene Feder eingeleitet. Die Seitenwand nach Figur 10—12 besteht aus massiven Wandteilen und zwar aus einer unten angelenkten Klappwand, einer Hubwand 50, die oben im Bereich des Daches an Gelenken 50a befestigt ist und aus einer Zwischenwand 51, die an der Hubwand angelenkt ist. Im Scheitelbereich Dach-Seitenwand ist ein torsionssteifes Rohr 53 über die gesamte Länge der Seitenwand jeweils pfostenseitig um eine Längsachse drehbar gelagert. Zur Verbindung zwischen dem Rohr 53 und der Hubwand 50 sind über die Länge verteilt, mehrere Lenkerpaare 54 vorgesehen. Davon ist ein Lenker jeweils fest am Rohr 53 angebracht, während der andere innenseitig an der Hubwand 50 angelenkt ist. Zur Koppelung der Klappwand mit der Hubwand ist ein Seil vorgesehen, das wie bei den bereits beschriebenen Ausführungsbeispielen im Kanal 13 von unten nach oben geführt ist und oben über eine Rolle auf das Drehsegment 52 umgelenkt ist.

Beim Öffnen der Seitenwand wird die Hubwand 50 nach oben gedrückt (Fig. 11), wobei die Zwischenwand frei herunterhängt. Bei vollständig geöffneter Seitenwand befinden sich Hubwand und Zwischenwand 51 in einer lotrechten Stellung wie auf Fig. 12 dargestellt.

In der geschlossenen Stellung sind die Wandteile mittels eines Treibriegels 58 verriegelt. Der Treibriegel befindet sich im Kanal 13. Zu seiner Beträtigung ist im Pfosten ein Exzenterverschluß 55 mit Betätigungshebel vorgesehen. Die Verbindung zwischen dem Exzenterverschluß und dem Treibriegel wird über eine Stange 56 und über ein Querstück 57 hergestellt.

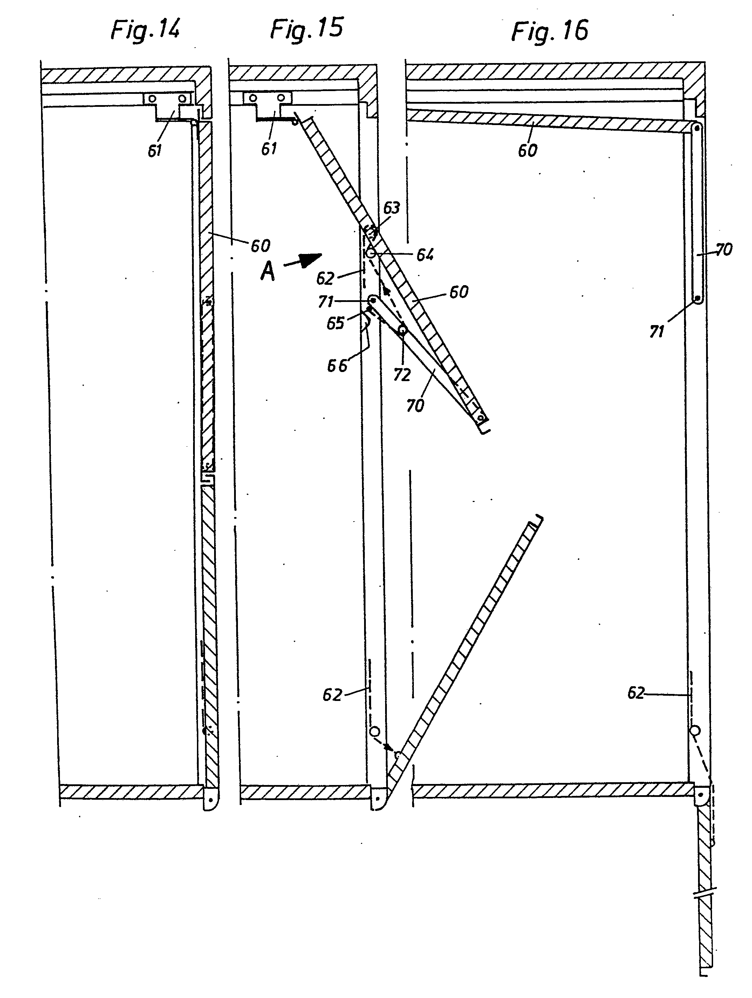

Die Seitenwand nach dem vierten Ausführungsbeispiel gemäß Fig. 14 bis 16 besteht aus einer plattenförmigen Klappwand und einer ebenfalls plattenförmigen Hubwand 60. Die Hubwand ist im unteren Bereich vorne und hinten über einen Arm 70 mit dem jeweiligen Pfosten verbunden, wobei ein Gelenkbolzen 71 die Verbindung des Armes mit dem Pfosten herstellt. Oben ist die Hubwand mit Waagen 61 gelenkig verbunden, die an unter dem Dach befestigten Schienen geführt sind. Zur Koppelung der Klappwand mit der Hubwand sind 2 Seile 62 vorgesehen. Sie sind jeweils im Kanal des Pfostens nach oben geführt, im oberen Bereich über eine pfostenseitige Umlenkrolle 63 nach unten umgelenkt. Von dieser Umlenkrolle 63 ist das Seil jeweils an einer pfostenseitigen Spannrolle 64 gespannt, es streckt sich von dort über eine am Arm angebrachte Umlenkrolle 72 und endigt an einer pfostenseitigen Seilbefestigung 65. Beim Öffnen werden die beiden Seile nach unten gezogen. Die beiden endseitigen Seilparten greifen jeweils an der Rolle 72 des Armes an und schwenken diesen nach oben bis in eine lotrechte Stellung nach Fig. 16. Der obere Rand der Klappwand wird dabei durch die Wagen 61 zur Mitte des Kastenaufbaues hin geführt. Die Schließbewegung wird durch Federn eingeleitet, die bei geöffneter Seitenwand gespannt sind und auf die Arme Kräfte ausüben.

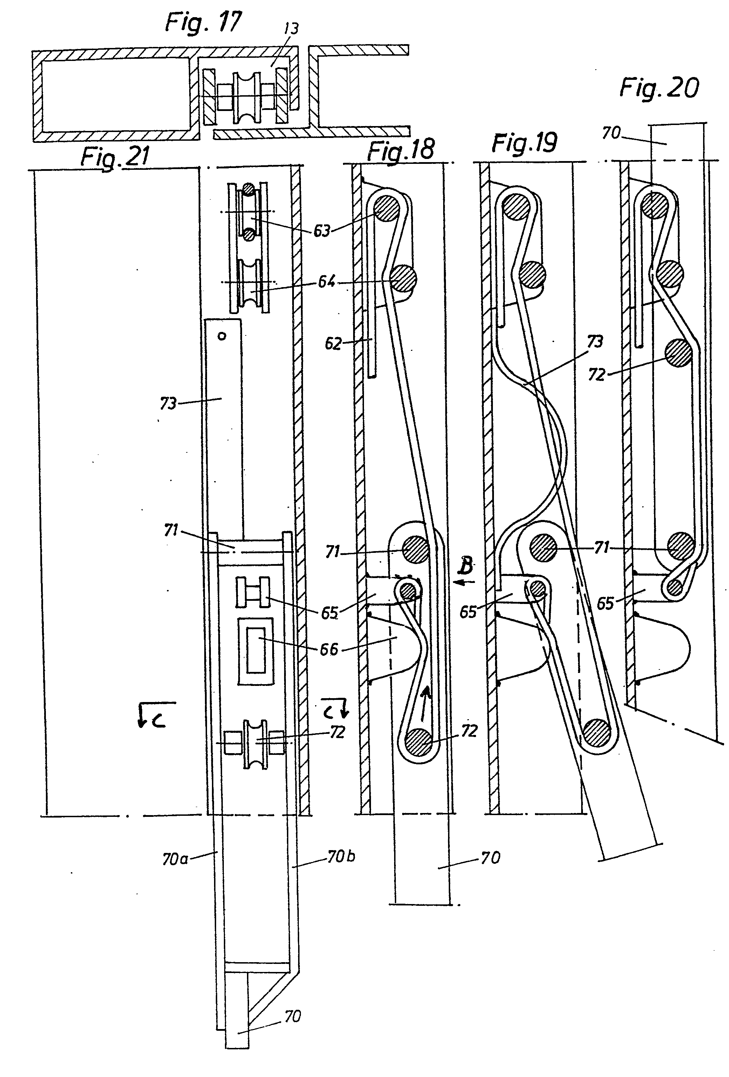

Einzelheiten der Koppelungselemente einer Seitenwand nach Fig. 14—16 sind aus den Figuren 17 bis 21 ersichtlich.

Jeder Arm besteht im Gelenkbereich aus zwei Armteilen 70a, b (Fig. 21). Der Gelenkbolzen 71 ist zwischen den Armteilen befestigt, die Umlenkrolle 72 ist zwischen den genannten Teilen gelagert. Die Umlenkrolle 63 und die zugeordnete Spannrolle 64 sind an einem Schenkel des rinnenförmigen Teiles 12 des Pfostens gelagert, wie aus Fig. 18 bis 20 ersichtlich ist. An diesem Schenkel des rinnenförmigen Teiles ist auch die Seilbefestigung 65 angebracht sowie ein Nocken 66, durch den das Seil zwischen der Seilbefestigung 65 und der Umlenkrolle 72 gewölbt gehalten wird, wenn die Seitenwand geschlossen ist. Beim Öffnen der Klappwand wird das Seil nach unten gezogen, wobei die beiden der Umlenkrolle 72 angreifenden Seilparten auf die Umlenkrolle eine nach oben gerichtete Kraftkomponente ausüben. Da diese Kraftkomponente durch die gewölbte Lagerung des Seils am Nocken 66 etwas zur Außenseite geneigt ist, ergibt sich ein Hebelarm zum Gelenkbolzen 71, wodurch die Schwenkbewegung des Armes eingeleitet und die Hubwand angehoben wird bis der Arm 70 eine lotrechte Stellung nach Fig. 20 erreicht hat. Die Blattfeder 73 ist dabei gespannt für das Einleiten der Schließbewegung.

**Patentansprüche**

1. Seitenwand für Kastenaufbauten von Lastkraftwagen, bestehend aus einer unteren Klappwand und einer damit gekoppelten oberen Hubwand, die zwischen zwei in der Seitenwandebene liegenden Pfosten gelagert ist, wobei die Pfosten jeweils Rechteckprofil aufweisen, weder innen noch außen gegenüber der Seitenwand vorstehen und wobei ein von der Klappwand zu dem Koppelungselement der Hubwand führendes Seil in einem an einem der Pfosten gegen die Seitenwand zu vorgesehenen Pfostenbreite aufweisenden Kanal angeordnet ist, in welchem auch Seilrollen vorgesehen sind, dadurch gekennzeichnet, daß der Kanal (13) zweiteilig ausgebildet ist und aus einem rinnenförmigen nach außen offenen mit dem Pfosten (10) verbundenen Teil (12) und einer dessen offene Seite abdeckenden an der Seitenwand überstehend angebrachten Leiste (16) besteht, und daß das Seil (24) vom boden bis mindestens zur Mitte der Hubwand (30) im Kanal geführt und in Bodennähe eine Seilbefestigung (22) an der Leiste der Klappwand (20) und eine Seilrolle (23) an einer Seitenwand des rinnenförmigen Teiles des Kanales befestigt ist.

2. Seitenwand nach Anspruch 1 gekennzeichnet durch folgende Merkmale:
— in den Kanälen der beiden Pfosten ist je ein Seil (24) bis zu einem an Pfosten gelagerten Drehsegment (34) geführt, wo es befestigt ist und bei geschlossener Seitenwand etwa über 180° aufliegt
— an jedem Drehsegment ist ein Arm (35) befestigt, der an seinem Ende an der Hubwand (30) angelenkt ist und bei geschlossener Hubwand nach untenstehend vom Kanal aufgenommen ist

— die Hubwand ist im bereich ihres oberen Randes mittels Rollen an dachseitigen Schienen (39) geführt.

3. Seitenwand nach Anspruch 1 gekennzeichnet durch folgende Merkmale:
— an einem der beiden die Seitenwand einschließenden Pfosten ist im Kanal ein Seil (46) vom Boden bis zu einem Drehsegment (43) geführt, das pfostenseitig im Scheitel zwischen Hubwand und Dach gelagert ist
— die Hubwand (40) ist mit ihrem oberen Rand an einem torsionssteifen Rohr (44) befestigt, welches mit seinem einen Ende am Drehsegment fest angebracht ist und mit seinem anderen Ende am gegenüberliegenden Pfosten drehbar gelagert ist.

4. Seitenwand nach Anspruch 1 gekennzeichnet durch folgende Merkmale:
— an einem der beiden Pfosten, welche die Seitenwand einschließen, ist im Scheitelbereich zum Dach hin pfostenseitig ein Drehsegment (52) gelagert, dem ein im Kanal nach unten führendes Seil zugeordnet ist
— ein torsionssteifes Rohr (53) ist an seinem einen Ende fest am Drehsegment angebracht, mit seinem anderen Ende am gegenüberliegenden Pfosten drehbar gelagert
— die dachseitig angelenkte Hubwand (50) ist mit dem Rohr über mehrere in Längsrichtung verteilte Lenkerpaare (54) verbunden
— ein Lenker eines jeden Lenkerpaares ist fest am Rohr angebracht, der andere ist mit seinem Ende an der Hubwand angelenkt.

5. Seitenwand nach Anspruch 1 gekennzeichnet durch folgende Merkmale:
— dem vorderen und dem hinteren Pfosten ist jeweils ein Arm (70) zugeordnet, der bei geschlossener Seitenwand vom Kanal aufgenommen ist, unten am unteren Rand der Hubwand (60) angelenkt ist und oben mittels eines Gelenkbolzens (71) mit dem Pfosten verbunden ist
— es ist eine pfostenseitige Umlenkrolle (63) über dem Gelenkbolzen (71) sowie eine armseitige Umlenkrolle (72) unter dem Gelenkbolzen vorgesehen
— das Seil ist im Kanal von unten kommend über die Umlenkrolle (63) über eine pfostenseitige Spannrolle (64), über die armseitige Umlenkrolle (72) und von dort nach oben geführt, wo es in der Nähe des Gelenkbolzens an einer pfostenseitigen Seilbefestigung (65) fest angebracht ist
— zwischen der Seilbefestigung und der armseitigen Umlenkrolle (72) liegt das Seil gewölbt auf einem pfostenseitigen Nocken (66) auf.

6. Seitenwand nach Anspruch 1 gekennzeichnet durch folgende Merkmale:
— zur Verriegelung der Wandteile ist bodenseitig in einem Pfosten ein Exzenterverschluß (55) untergebracht, an dem eine nach oben gerichtete Stange (56) angeschlossen ist

— die Stange ist mittels eines Querstückes (57) mit einem im rinnenförmigen Teil des Pfostens gelagerten Treibriegel (58) verbunden.

**Revendications**

1. Paroi latérale de caisse de camion qui se compose d'un panneau inférieur à rabattement et d'un panneau supérieur relevable, accouplé au premier panneau, et qui est montée entre deux montants se trouvant dans son plan, les montants présentant une section transversale rectangulaire, ne dépassant la paroi latérale ni vers l'intérieur, ni vers l'extérieur, et des câbles reliant le panneau à rabattement aux éléments d'accouplement du panneau relevable étant prévus chacun dans un canal présentant la largeur du montant et prévu à chaque montant en direction de la paroi latérale, canal dans lequel sont également montés des galets sur lesquels passe le câble, caractérisée en ce que chaque canal (13) est en deux parties et se compose d'une partie en forme de rigole (12), ouverte vers l'extérieur, fixée au montant (10), et d'une plaque (16) qui couvre le côté ouvert de la partie en forme de rigole et qui dépasse la paroi latérale, en ce que chaque câble (24) est guidé dans le canal de la base jusqu'au milieu au moins du panneau relevable (30), en ce qu'à proximité de la base, une fixation de câble (22) est fixée à la plaque du panneau à rabattement (20) et en ce qu'un galet (23) sur lequel passe le câble est fixé à une paroi latérale de l'élément en forme de rigole formant le canal.

2. Paroi latérale suivant la revendication 1, caractérisée en ce que:
— dans le canal de chacun des deux montants est guidé un câble (24) qui atteint un segment tournant (34) monté sur le montant, segment tournant auquel ce câble est fixé et que ce câble embrasse d'un peu plus de 180° lorsque la paroi latérale est fermée;
— à chaque segment tournant est fixé un bras (35) qui, par l'une des extrémités, est articulé au panneau relevable (30) et qui, descendant lorsque le panneau relevable est fermé, est contenu dans le canal;
— le panneau relevable est, dans la zone du bord supérieur, guidé par des galets sur des rails (39) prévus côté toit.

3. Paroi latérale suivant la revendication 1, caractérisée en ce que:
— dans le canal correspondant à l'un des deux montants prévus de part et d'autre de la paroi latérale est guidé un câble (46) allant de la base à un segment tournant (43) qui est monté côté montant dans l'angle de sommet formé par le panneau relevable et par le toit;
— au bord supérieure du panneau relevable (40) est fixé un tube rigide à la torsion (44) qui, par l'une des extrémités, est fixé au segment tournant et qui, par l'autre extrémité, est monté, de façon à pouvoir tourner, sur le montant opposé.

4. Paroi latérale suivant la revendication 1, caractérisée en ce que:
— sur l'un des deux montants qui sont prévus de part et d'autre de la paroi latérale est monté, dans la zone de sommet formée par cette paroi et par le toit, côté montant, un segment tournant (52) auquel est adjoint un câble guidé vers le bas dans le canal;
— un tube rigide à la torsion (53) est, par l'une des extrémités, fixé au segment tournant et est, par l'autre extrémité, monté, de façon à pouvoir tourner, sur le montant opposé;
— le panneau relevable (50), articulé côté toit, est relié au tube par plusieurs paires de bielles (54) réparties dans le sens longitudinal;
— l'une des bielles de chaque paire de bielles est fixée au tube et l'autre est articulée par l'extrémité au panneau relevable.

5. Paroi latérale suivant la revendication 1, caractérisée en ce que:
— au montant antérieur et au montant postérieur est adjoint un bras (70), qui, lorsque la paroi latérale est fermée, est contenu dans le canal, qui est articulé, à la partie inférieure, au bord inférieur du panneau relevable (60) et qui, à la partie supérieure, est relié au montant par un axe d'articulation (71);
— il est prévu un galet de renvoi (63), côté montant, au-dessus de l'axe d'articulation (71), de même qu'un galet de renvoi (72), côté bras, en dessous de l'axe d'articulation;
— dans le canal, le câble, venant du bas, est guidé sur le galet de renvoi (63), sur un galet tendeur (64) côté montant, sur le galet de renvoi (72) côté bras, et, de là, vers le haut, point où il est fixé, au voisinage de l'axe d'articulation, à une fixation (65) côté montant;
— entre la fixation de câble et le galet de renvoi (72) côté bras, une flexion est imprimée au câble par une came (66) côté montant.

6. Paroi latérale suivant la revendication 1, caractérisée en ce que:
— pour le verrouillage des panneaux, il est prévu sur un montant, côté base, une fermeture à excentrique (55), à laquelle est fixée une tige (56) dirigée vers la haut;
— la tige est reliée par une partie transversale (57) à un verrou de commande (58) qui est monté dans la partie en forme de rigole du montant.

**Claims**

1. A side wall for box-shaped structures of lorries, comprised of a lower hinged wall and a lifting wall coupled thereto, which are mounted between two uprights located in the plane of the side wall, whereby the uprights each have a rectangular shaped section protruding neither inwardly nor outwardly relative to the side wall and whereby cables leading from the hinged wall to the coupling elements are located in a passage formed in each upright having the width of the upright and facing towards the side wall and in which passage cable pulleys are provided, characterised by the feature that each passage (13) is made in two parts and comprises a channel-like outwardly open part (12) connected to the upright (10) and a ledge (16) mounted on the side wall with overlap and covering the open side, and that each cable (24) extending in the passage from the base to at least the centre of the lifting wall (30) and secured close to the base, has a cable securing means (22) secured to the ledge of the hinged wall (20) and a cable pulley (23) secured to the side wall of the channel-like part of the passage.

2. A side wall according to claim 1, characterised by the following features: in each of the passages of both uprights is a cable (24) extending to a rotary segment (34) mounted on the upright and to which the cable is secured and, when the side wall is closed, abuts at more than 180°; an arm (35) which is hingedly mounted at one of its ends to the hinged wall (30) is secured to each rotary segment and is accommodated by the passage when the hinged wall is closed, projecting downwardly; the hinged wall in the region of its upper edge is extended by means of rollers on roof-mounted rails (39).

3. A side wall according to claim 1 characterised by the following features: on one of the two uprights including the side wall a cable (46) extends in the passage from the base to a rotary segment (43) which is mounted on the side of the upright in the apex between hinged wall and roof; the hinged wall (40) is secured at its upper edge to a torsion-resistant tube (44) which is securedly mounted at one of its ends on the rotary segment and is rotatably mounted at its other end on the opposite upright.

4. A side wall according to claim 1 characterised by the following features: a rotary segment (52) is mounted on one of the two uprights which include the side wall, in the apex region towards the roof on the side of the upright, and has a downwardly extending cable associated therewith; a torsion-resistant tube (51) is mounted at one of its ends on the rotary segment and at its other end is rotatably mounted on the opposite upright; the hinged wall (50) connected at the roof side is connected to the tube by means of a plurality of pairs (54) of guide rods spaced in the longitudinal direction; one guide rod of each pair of guide rods is secured to the tube, the other is connected at its end to the hinged wall.

5. A side wall according to claim 1 characterised by the following features: in the front and rear upright each have an arm (70) associated therewith which, when the side wall is closed, is accommodated by the passage, connected at the bottom to the lower edge of the hinged wall (6) and at the top connected to the upright by means of a joint pin (71); a guide roller (63) is provided on the upright side above the joint pin (71) and a guide roller (72) provided on the arm side below the joint pin; the cable is extended in the passage arriving from below over a tension roller (64) on the upright side and from there extends upwardly where it is secured close to the joint pin on a cable mounting (65) on the upright side; the cable abuts on a convex cam (66) on the upright side between the cable mounting and the guide roller (72) on the arm side.

6. A side wall according to claim 1 characterised by the following features: to lock the wall sections an eccentric closure (55) is accommodated in an upright on the base side and to which closure an upwardly extending rod (56) is connected; the rod is connected by means of a cross piece (57) tro a driving catch (58) mounted in the channel-like part of the upright.

## Fig.1

# Fig. 2

2

Fig. 4

33a

33b

Fig. 5

11

IV          IV

35

13          33b

33a

16

30

Fig. 3

24

23

V          V

VI          VI

Fig. 6

22

III          III

13

23

25

16

20

21

3

Fig. 7

Fig. 8

Fig. 9

Fig. 12

Fig. 10    Fig. 11

53

50

51

54

52

50a

50a

52

54

54

52

50

50

50

Fig. 13

50

51

51

58

51

XIII

51

57

56

55

Fig.14    Fig.15    Fig.16

Fig. 17
Fig. 21
Fig. 18
Fig. 19
Fig. 20

7